# EUROPÄISCHE PATENTANMELDUNG

(11) **EP 2 692 626 A2**
(43) Veröffentlichungstag der Anmeldung: **05.02.2014**
(21) Anmeldenummer: 13177737.7
(22) Anmeldetag: 24.07.2013
(51) Int. Cl.: B63B 35/44, B63H 21/17, B63J 2/12

(54) **Antriebsstrang zur Verwendung in einem Schiff**

(30) Priorität: 30.07.2012 DE 202012102864 U
(71) Anmelder: Becker Marine Systems GmbH & Co. KG, 21079 Hamburg (DE)
(72) Erfinder: Lehmann, Dirk, 21423 Winsen/Luhe (DE)
(74) Vertreter: Richter Werdermann Gerbaulet Hofmann

(57) **Zusammenfassung**

Die Erfindung betrifft einen Antriebsstrang (10) zur Verwendung in einem Schiff (1), wobei der Antriebstrang besteht aus:
mindestens einem Tank (100), der zur Speicherung von chemischer Energie in Form von Gas, bevorzugt Flüssiggas und/oder Erdgas, besonders bevorzugt LNG oder LPG, eingerichtet ist;
mindestens einem reinen Gas-Generator, bevorzugt Flüssiggas-Generator und/oder Erdgas-Generator, besonders bevorzugt LNG-Generator (200) oder
LPG-Generator, der zur Erzeugung zumindest von elektrischer Energie aus der chemischen Energie des Gases aus dem mindestens einem Tank (100) eingerichtet ist;
mindestens einer Batterie (300), die zur Speicherung der von dem Gas-Generator erzeugten elektrischen Energie eingerichtet ist; und
einer Antriebseinrichtung (400), die eingerichtet ist, die elektrische Energie von der mindestens einen Batterie zu beziehen, um die elektrische Energie in mechanische Energie umzuwandeln und um das Schiff mittels der mechanischen Energie anzutreiben.

## Beschreibung

### Beschreibung

Die Erfindung betrifft einen Antriebsstrang zur Verwendung in einem Schiff. In einer bevorzugten Ausführungsform der Erfindung wird dies durch einen Antriebsstrang realisiert, der unter anderem aus einem oder mehreren reinen LNG-Generatoren (LNG, "liquified natural gas", Flüssigerdgas) zur Erzeugung elektrischer Energie und einer Batterie zum Speichern der elektrischen Energie zum letztendlichen Antrieb des Schiffs besteht.

### Stand der Technik

Es sind im Stand der Technik Bargen bzw. Barkassen oder Pontons bekannt, die in der Lage sind, andere größere Schiffe mit Energie zu versorgen (sogenannte Power-Bargen).

Diese Power-Bargen nahmen ihren Anfang in den frühen 1940er Jahren. Als Beispiel sei das Power-Bargenprojekt von General Electrics™ für das "War Production Board" im Jahre 1942 genannt. Solche Power-Bargen leisten eine Vielzahl von Anwendungen, wie zum Beispiel die Erzeugung von Notstrom und zeitweisem Strom, die Bereitstellung eines mobilen Energielieferanten oder die Bereitstellung von elektrischem Strom in Situationen, in denen der Aufbau eines ortsfesten Energielieferanten zu riskant oder zu kostenintensiv wäre. Es ist jedoch auch möglich, die Power-Bargen permanent an einem Ort zu belassen, wodurch sie ähnlich einem landgebundenen Energielieferanten fungieren können.

Power-Bargen bestechen vor allem durch ihre kurze Produktionszeit, ihre Vielseitigkeit im Einsatz, ihren minimalen Platzbedarf und ihre relativ niedrigen Kosten. Die Kapitalaufwendungen für Aufbau und Betrieb der Power-Bargen sind durchaus konkurrenzfähig mit den landbasierten Pendants der Power-Bargen.

In diesem Zusammenhang offenbart die Druckschrift EP 2 092 177 A1 bzw. das Mitglied WO 2009/056380 A1 ihrer Patentfamilie eine schwimmfähige Hafenstromversorgung, d.h. die Komponenten der Hafenstromversorgung sind auf oder in einer schwimmfähigen Einrichtung, insbesondere einer Barge, angeordnet.

Der vorgenannte Stand der Technik ist jedoch noch immer auf eine hybride Verbrennung von LNG und Dieselkraftstoff gerichtet, und realisiert nicht das Potenzial einer reinen Verwendung von LNG.

Die Druckschrift US 2012/0090527 A1 offenbart ein LNG-angetriebenes Schiff mit einem LNG-Tank und einem LNG-Generator zum Antrieb des Schiffs. Dieser Stand der Technik erkennt jedoch nicht das Potenzial, das einer Speicherbatterie innewohnt.

Die Druckschrift DE 20 2009 015 026 U1 offenbart eine Vorrichtung zum Antrieb eines Fahrzeugs, insbesondere eines Wasserfahrzeugs, enthaltend einen zur Erzeugung elektrischer Energie mit einem Generator zusammenwirkenden Verbrennungsmotor, enthaltend eine über einen Gleichrichter mit dem Generator zusammenwirkende Energiespeichereinrichtung zur Bevorratung von seitens des Generators bereitgestellter elektrischer Energie sowie zur bedarfsgerechten Abgabe derselben und enthaltend eine mittels einer Motorsteuereinrichtung ansteuerbare Antriebseinrichtung mit wenigstens einem Elektromotor, wobei die Energie zum Betrieb des Elektromotors von dem Generator und/oder von der Energiespeichereinrichtung bereitstellbar ist, wobei die Motorsteuereinrichtung wenigstens zwei voneinander funktional unabhängige Motorsteuermodule aufweist zur Ansteuerung des Elektromotors.

Der vorgennante Stand der Technik basiert jedoch auf einem reinen Dieselkraftstoffantriebssystem und erkennt somit nicht die Vorteile eines Hybridantriebssystems, und insbesondere nicht die Vorteile eines reinen Gas-Systems.

### Darstellung der Erfindung: Aufgabe, Lösung, Vorteile

Die vorstehend beschriebenen Stände der Technik realisieren lediglich Teilaspekte, die einen Antriebsstrang eines Schiffes emissionsärmer und damit umweltfreundlicher gestalten können. Es bleibt jedoch das Potenzial unberücksichtigt, die Umweltfreundlichkeit des Antriebsstrangs noch weiter zu verbessern.

Daher liegt der Erfindung die Aufgabe zugrunde, das vorstehend beschriebene Problem zu lösen.

Die erfindungsgemäße Lösung sieht in einem ersten Aspekt einen Antriebsstrang zur Verwendung in einem Schiff vor, wobei der Antriebstrang aus mindestens einem Tank, der zur Speicherung von chemischer Energie in Form von Gas, bevorzugt Flüssiggas und/oder Erdgas, besonders bevorzugt LNG oder LPG, eingerichtet ist, mindestens einem reinen Gas-Generatoren, bevorzugt Flüssiggas-Generator und/oder Erdgas-Generator, besonders bevorzugt LNG-Generator oder LPG-Generator, der zur Erzeugung zumindest von elektrischer Energie aus der chemischen Energie des Gases aus dem mindestens einen Tank eingerichtet ist, mindestens einer Batterie, die zur Speicherung der von dem mindestens einen reinen Gas-Generator erzeugten elektrischen Energie eingerichtet ist, und einer Antriebseinrichtung, besteht, wobei die Antriebseinrichtung eingerichtet ist, die elektrische Energie von der mindestens einen Batterie zu beziehen, um die elektrische Energie in mechanische Energie umzuwandeln und um das Schiff mittels der mechanischen Energie anzutreiben.

Unter LNG wird vorliegend die allgemein gebräuchliche Abkürzung für Flüssigerdgas ("liquefied natural gas") und unter LPG die allgemein gebräuchliche Abkürzung für Autogas ("liquefied petroleum gas"). Grundsätzlich könnte der Gas-Generator auch derart ausgebildet sein, dass er mit anderen als den vorgenannten Gassorten, beispielsweise verdichtetem Erdgas (CNG) betrieben wird.

Unter dem Begriff reiner Gas-Generator wird im Folgenden eine Einrichtung verstanden, die durch Verbrennung von Gas zumindest Strom erzeugen kann. Beispielsweise umfasst eine solche Einrichtung eine Gas-Verbrennungskraftmaschine bzw. eine Gasturbine, die mit einem Generator gekoppelt ist. Durch die Verbrennungskraftmaschine wird der Generator angetrieben, der wiederum Strom erzeugt. Dabei ist vorgesehen, dass die Verbrennungskraftmaschine ausschließlich Gas und keine weiteren Brennstoffe, insbesondere keinen Diesel, verbrennt. Insofern umfassen die reinen Gas-Generatoren gemäß der Erfindung keine Hybridantriebe.

Je nach Bedarf und Dimensionierung können ein oder mehrere Tanks zur Speicherung des den Brennstoff für den Gas-Generator bildenden Gases vorgesehen sein.

Unter dem Ausdruck "chemische Energie" ist vorliegend diejenige Energie zu verstehen, die durch Verbrennung des im Tank gespeicherten Gases mittels des Gas-Generators freigesetzt und vom Gas-Generator zumindest in Strom umgewandelt wird.

Der erfindungsgemäße Antriebsstrang treibt dabei, bevorzugt ausschließlich, dasjenige Schiff an, auf dem der Antriebsstrang installiert bzw. angeordnet ist.

In einer ersten Ausgestaltung des ersten Aspekts ist der reine Gas-Generator eingerichtet, ausschließlich Gas, insbesondere ausschließlich Erdgas bzw. LNG, zur Erzeugung der elektrischen Energie zu verwenden. Insbesondere ist der Gas-Generator kein Hybridgenerator, der zusätzlich noch Diesel oder andere Treibstoffe außer Gas, insbesondere außer Flüssiggas und/oder Erdgas, verbrennen kann. Die vorliegenden Generatoren können vielmehr ausschließlich Gas, bevorzugt ausschließlich Flüssiggas und/oder Erdgas, besonders bevorzugt LNG oder LPG, verbrennen.

Alternativ oder zusätzlich ist die Batterie vorzugsweise als Pufferbatterie zur Kompensation von Lastenschwankungen der Antriebseinrichtung ausgebildet. Auch können Last- und Frequenzschwankungen auf Seiten des mindestens einen Gas-Generators durch die Batterie ausgeglichen werden. Alternativ oder zusätzlich ist die Batterie ferner vorzugsweise als Hybridbatterie ausgebildet. Ferner kann die Antriebseinrichtung die elektrische Energie von der mindestens einen Batterie beziehen, und/oder die Antriebseinrichtung kann die elektrische Energie von der Batterie und dem mindestens einen Gas-Generator beziehen. Auch ist es möglich, dass die Antriebseinrichtung, zumindest zeitweise, die elektrische Energie nur von dem mindestens einen Gas-Generator bezieht.

Alternativ oder zusätzlich ist die Antriebseinrichtung vorzugsweise durch zumindest einen Schiffspropeller oder zumindest einen Düsenpropeller ausgebildet.

In einem zweiten Aspekt ist der oder sind die Gas-Generatoren, insbesondere LNG-Generatoren, durch Blockheizkraftwerke, BHWKs, ausgebildet. In diesem Fall können die BHWKs neben elektrischer Energie auch thermische Energie erzeugen.

Ferner umfasst der zweite Aspekt vorzugsweise ein Schiff, welches einen erfindungsgemäßen Antriebsstrang, insbesondere einen Antriebsstrang mit als BHKW ausgebildeten mindestens einen Gas-Generator, umfasst und welches bevorzugt für den Hafenbetrieb eingerichtet ist. In diesem Fall kann das Schiff bzw. der Antriebsstrang durch zumindest eine Leitung mit einem landseitigen Energienetz verbunden sein. Dadurch kann der mindestens eine Gas-Generator des Antriebsstrangs durch landseitig bereitgestelltes Gas, insbesondere Erdgas, betrieben werden. Ferner kann durch die Vorsehung der zumindest einen Leitung das Schiff zur Zuführung der elektrischen und/oder thermischen Energie zu einem landseitigen Energienetz eingerichtet sein. Alternativ kann das Schiff vom Hafen bezüglich eines landseitigen Energienetzes autark sein, und kann das Schiff zur Zuführung von elektrischer und/oder thermischer Energie zu einem anderen Schiff eingerichtet sein.

In einer weiteren Ausgestaltung des zweiten Aspekts ist das Schiff für den Seebetrieb eingerichtet. In diesem Fall kann die generierte elektrische Energie bevorzugt zur Eigenversorgung des Schiffes verwendbar sein. Sind die Gas-Generatoren derart ausgebildet, dass diese auch thermische Energie erzeugen können, beispielsweise als BHKW, kann die erzeugte thermische Energie bevorzugt zur Erzeugung von Wärme und/oder Kälte verwendet werden. Die erzeugte Wärme kann beispielsweise mittels eines, insbesondere auf dem Schiff vorgesehenen Wärmespeichers, insbesondere Latentwärmespeichers, gespeichert werden. Auch kann die Wärme anderen geeigneten Verbrauchern zugeführt werden. Wird Kälte erzeugt, kann diese bevorzugt einer Klimaanlage des Schiffes zugeführt werden. Ferner kann auch im für den Hafenbetrieb eingerichteten Schiff zumindest ein Teil der generierten elektrischen Energie und/oder der erzeugten thermischen Energie entsprechend der Ausgestaltung für den Seebetrieb genutzt werden.

In einem dritten Aspekt sind mehrere Gas-Generatoren, bevorzugt mehrere Erdgas-Generatoren und/oder mehrere Flüssiggasgeneratoren, besonders bevorzugt mehrere LNG-Generatoren oder mehrere LPG-Generatoren, in dem Antriebsstrang vorhanden, die für die Erzeugung elektrischer Energie variabel zu- und abschaltbar sind. In diesem Fall kann das Zu- und Abschalten der Gas-Generatoren abhängig von der Last durch die Antriebseinrichtung erfolgen.

In einem vierten Aspekt, der auch den ersten bis dritten Aspekt mit umfassen kann, ist der mindestens eine Tank durch einen Tanklastzughänger ausgebildet. In diesem Fall kann das Schiff eingerichtet sein, zumindest einen Tanklastzughänger und/oder zumindest einen Lastkraftwagen bestehend aus einer Zugmaschine und dem Tanklastzughänger dauerhaft aufzunehmen. Wenn dem so ist, dann kann das Schiff weiterhin einen Schleusenraum unter Deck umfassen, der zur Aufnahme des Lastkraftwagens und/oder des Tanklastzughängers eingerichtet ist. Alternativ oder zusätzlich kann der Tanklastzughänger oder der Lastkraftwagen geschützt auf dem Hauptdeck des Schiffes aufnehmbar sein. Jedoch ist auch denkbar, dass nur der Tank von dem Schiff aufgenommen wird, so dass Zugmaschine und der den Tank tragende Lastzughänger des Tanklastzughängers nicht an Bord des Schiffes aufgenommen werden. In einem solchen Fall ist es besonders vorteilhaft, wenn der Tank als Tankcontainer, insbesondere als Tankcontainer mit Abmessungen nach dem ISO-Standard, ausgebildet ist. Bevorzugt kann der Tankcontainer von einer Zugmaschine mit dazu ausgebildeten Sattelauflieger oder Lastzuganhänger zu dem Schiff befördert werden, und danach, insbesondere mit einem Kran, an Bord des Schiffes verbracht werden und bei Bedarf ausgetauscht werden. Diese Ausbildungsform ist insbesondere dann vorteilhaft, wenn keine geeigneten Kaianlagen verfügbar sind, um den Tanklastzuganhänger und/oder den Lastkraftwagen bestehend aus einer Zugmaschine und dem Tanklastzughänger auf das Schiff zu fahren.

In einem fünften Aspekt ist ein Verfahren zum Steuern eines Antriebsstrangs zur Verwendung in einem Schiff vorgesehen, wobei der Antriebstrang aus mindestens einem Tank, der zur Speicherung von chemischer Energie in Form von Gas, bevorzugt Flüssiggas und/oder Erdgas, besonders bevorzugt LNG oder LPG, eingerichtet ist, mindestens einem reinen Gas-Generator, bevorzugt Flüssiggas-Generator und/oder Erdgas-Generator, besonders bevorzugt LNG-Generator oder LPG-Generator, mindestens einer Batterie und einer Antriebseinrichtung zum Antrieb des Schiffes besteht, umfassend die Schritte Speichern, in dem mindestens einen Tank, von chemischer Energie in Form von Gas, bevorzugt Flüssiggas und/oder Erdgas, besonders bevorzugt LNG oder LPG, Erzeugen, in dem mindestens einen reinen Gas-Generator, zumindest von elektrischer Energie aus der chemischen Energie des Gases, Speichern, in der mindestens einen Batterie, der von dem mindestens einen reinen Gas-Generator erzeugten elektrischen Energie, Beziehen, durch die Antriebseinrichtung, der elektrischen Energie von der Batterie und/oder von dem reinen Gas-Generator, Umwandeln der elektrischen Energie in mechanische Energie, und Antreiben, durch die Antriebseinrichtung, des Schiffes mittels der mechanischen Energie.

Der Schritt des Beziehens, durch die Antriebseinrichtung, der elektrischen Energie kann das Beziehen, durch die Antriebseinrichtung, der elektrischen Energie von der Batterie und dem mindesten einen reinen Gas-Generator umfassen. Ferner kann der Schritt des Beziehens, durch die Antriebseinrichtung, der elektrischen Energie auch das zumindest zeitweise Beziehen, durch die Antriebseinrichtung, der elektrischen Energie ausschließlich von dem mindesten einen reinen Gas-Generator umfassen.

Durch dieses Verfahren wird ermöglicht, dass der Antrieb eines Schiffes ausschließlich mit Gas angetrieben wird, wodurch zum einen gegenüber bekannten Dieselantrieben oder Hybridantrieben die Umweltfreundlichkeit des Antriebs wesentlich verbessert wird. Zum anderen kann auch der Wirkungsgrad des Antriebs verbessert werden. Gemäß des Verfahrens ist vorgesehen, dass durch den Gas-Generator Strom unter Einsatz von Gas, insbesondere Flüssiggas und/oder Erdgas, bevorzugt LNG oder LPG, als Brennstoff erzeugt wird. Der Strom wird in der mindestens einen Batterie zwischengespeichert. Der Strom kann während der Fahrt des Schiffes erzeugt werden oder auch wenn sich das Schiff im Stillstand befindet bzw. der Antrieb abgestellt ist. Die Antriebseinrichtung wird wiederum aus der Batterie gespeist und treibt die Schiffspropellerwelle dabei bevorzugt ausschließlich durch Strom als Energiequelle, an. Hierfür umfasst die Antriebseinrichtung bevorzugt einen oder mehrere Elektromotoren, die aus der mindestens einen Batterie speisbar sind. Zusätzlich kann der Antriebsstrang derart ausgelegt sein, dass die Antriebseinrichtung auch noch aus einer anderen Quelle, bevorzugt direkt von dem mindestens einen Gas-Generator, mit Strom speisbar ist. Insbesondere kann vorgesehen sein, dass die Antriebseinrichtung in Abhängigkeit eines oder mehrerer vorherbestimmter Parameter, beispielsweise der Geschwindigkeit des Schiffes, von der Batterie oder von einer anderen Quelle, insbesondere direkt vom mindestens einen Gas-Generator, speisbar ist bzw. gespeist wird. So kann es insbesondere bei höheren Geschwindigkeiten, z.B. ab 10 kn, insbesondere ab 13 kn, bevorzugt ab 16 kn, besonders bevorzugt ab 19kn, direkt, insbesondere ausschließlich, von dem mindestens einen Gas-Generator gespeist werden. Ferner kann die Antriebseinrichtung unterhalb der vorgenannten Geschwindigkeiten, bevorzugt ausschließlich, von der mindestens einen Batterie gespeist werden. Alternativ kann es bevorzugt sein, dass die Antriebseinrichtung in allen Betriebszuständen immer nur durch die mindestens eine Batterie speisbar ist. Auch ist es möglich, dass während der Fahrt des Schiffes der Gas-Generator still steht und die Antriebseinheit von der in der mindestens einen Batterie gespeicherten elektrischen Energie angetrieben wird. Je nach Bedarf kann der Gas-Generator dann während der Fahrt zu- oder abgeschaltet werden. Hierfür kann eine entsprechende Steuereinrichtung vorgesehen sein. Das Zu- und Abschalten kann beispielsweise in Abhängigkeit eines oder mehrerer vorherbestimmter Parameter, beispielsweise der Geschwindigkeit des Schiffes, erfolgen. So kann der Gas-Generator beispielsweise bei einer Geschwindigkeit von 4 kn oder höher, bevorzugt von 7 kn oder höher, besonders bevorzugt von 10 kn oder höher hinzugeschaltet werden. Auch kann die Zu- bzw. Abschaltung des mindestens einen Gas-Generators in Abhängigkeit des Ladezustands der mindestens einen Batterie erfolgen. Sind mehrere Gas-Generatoren vorgesehen, so können die einzelnen Gas-Generatoren gemeinsam oder unabhängig voneinander hinzugeschaltet und/oder abgeschaltet werden.

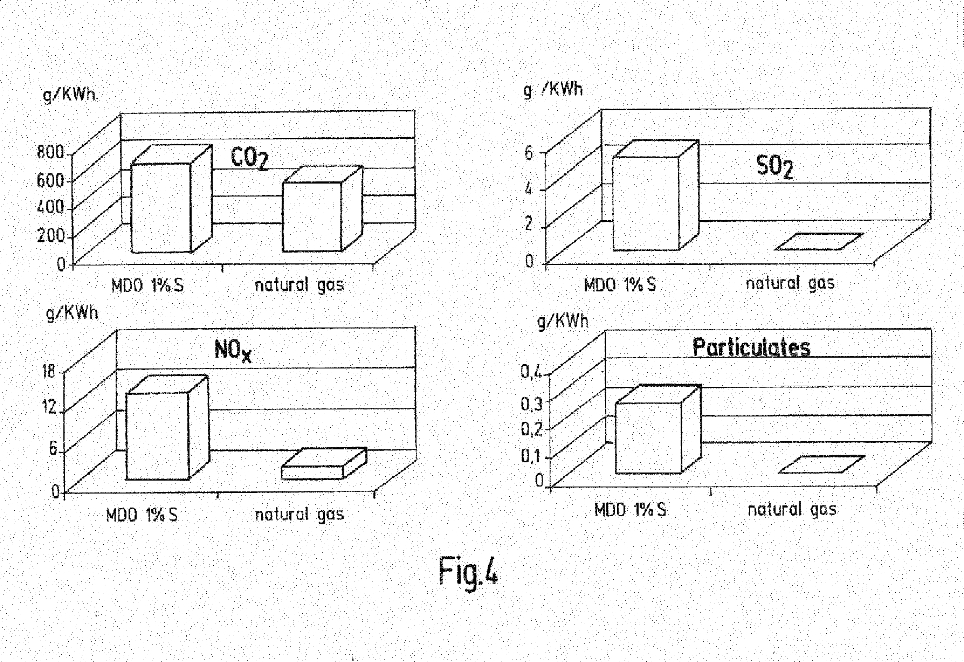

Wie aus Fig. 4 ersichtlich, ermöglicht die vorliegende Erfindung folgende Vorteile. Verschiedene Arten von Schiffen, z.B. Fähren und auch Hafenbargen, (sogenannte Power-Bargen) können mit dem vorstehend beschriebenen Antriebsstrang versehen sein. Gegenüber herkömmlichen Dieselantrieben ist der LNG-Antriebsstrang sehr viel umweltfreundlicher. Insbesondere entsteht keinerlei Partikel- oder Stickstoffausstoß (vgl. Fig. 4, rechte Seite) und der Stickoxid- und CO₂-Ausstoß wird gegenüber Schiffsdieseln erheblich reduziert (vgl. Fig. 4, linke Seite).

### Kurze Beschreibung der Zeichnungen

Nachfolgend werden bevorzugte Ausführungsformen der Erfindung anhand der Zeichnungen näher beschrieben. Es zeigen:
- Fig. 1: eine schematische Darstellung eines erfindungsgemäßen Antriebsstrangs in einem ersten Aspekt zur Verwendung in einem Schiff;
- Fig. 1A: ein Implementierungsbeispiel des erfindungsgemäßen Antriebsstrangs in einem Schiff;
- Fig. 2: einen zweiten und einen dritten Aspekt des erfindungsgemäßen Antriebsstrangs;
- Fig. 3A und 3B: einen vierten Aspekt des erfindungsgemäßen Antriebsstrangs;
- Fig. 4: die Vorteile des erfindungsgemäßen Antriebsstrangs; und
- Fig. 5: einen Verfahrensaspekt des erfindungsgemäßen Antriebsstrangs.

### Bevorzugte Ausführungsform der Erfindung

Zu Beginn sei ausgeführt, dass nachfolgende Komponenten der erfindungsgemäßen Vorrichtung manchmal mit ihrer technischen Implementierung bzw. Teilen ihrer technischen Implementierung (z.B. Schiffsschraube) und manchmal mit ihrer allgemeinen Form (z.B. Antriebseinrichtung) bezeichnet werden. Dies schränkt jedoch die allgemeine Form nicht auf die konkrete technische Implementierung ein, sondern stellt jeweils lediglich ein Ausführungsbeispiel dar. In diesem Zusammenhang sei ausgeführt, dass die Verwendung von Flüssigerdgas (LNG) in den gezeigten Figuren nicht die Verwendung anderer Gase, insbesondere natürlicher Gase bzw. Flüssiggase ausschließt; vorteilhaft wird für die Erfindung ein Gas verwendet, das eine mit LNG vergleichbare Emissionsarmut hat.

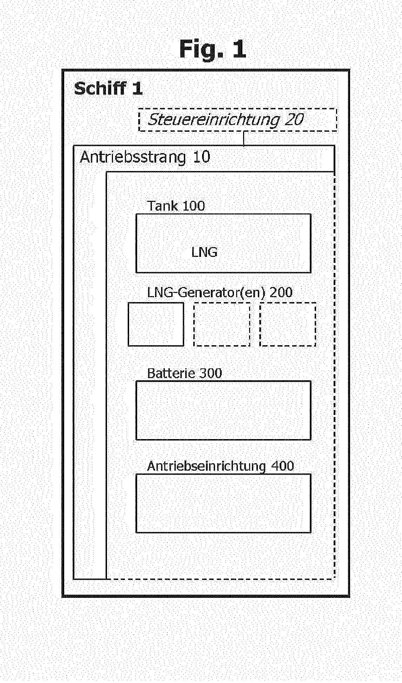

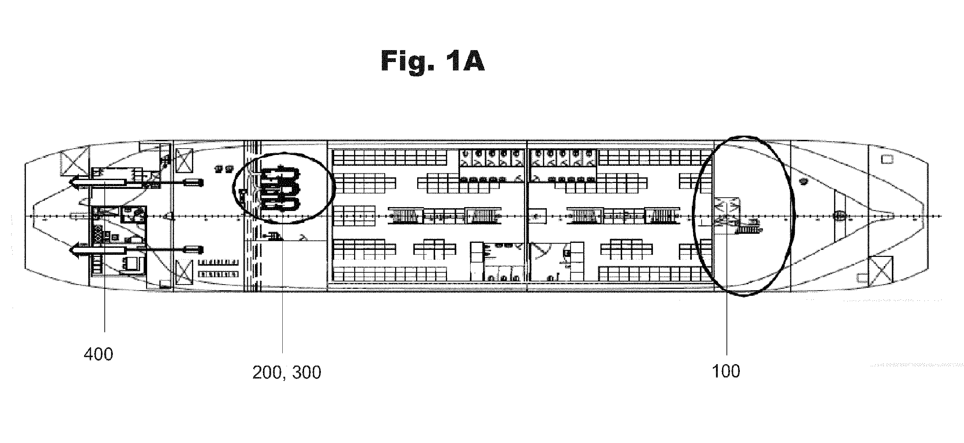

Fig. 1 zeigt eine schematische Darstellung eines erfindungsgemäßen Antriebsstrangs 10 in einem ersten Aspekt zur Verwendung in einem Schiff 1, und Fig. 1A zeigt ein Implementierungsbeispiel des erfindungsgemäßen Antriebsstrangs in einem Schiff 1.

Wie in Fig. 1 gezeigt, umfasst ein Schiff 1 den Antriebsstrang 10 und eine optionale Steuereinrichtung 20. Der Antriebsstrang 10 wiederum besteht aus einem Tank 100, einem oder mehreren LNG-Generatoren 200, einer Batterie 300 und einer Antriebseinrichtung 400.

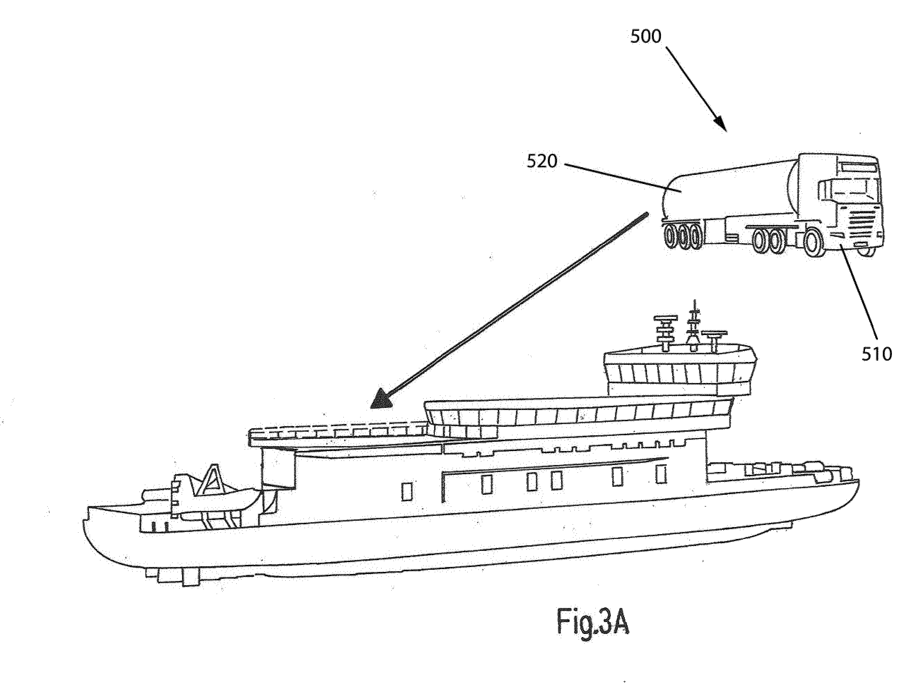

Der Tank 100 dient zur Speicherung von chemischer Energie in Form von Flüssigerdgas, LNG. Mit Ausnahme des Aspekts, der nachstehend unter Bezugnahme auf Figuren 3A bis 3B beschrieben wird, ist jedweder Tank zur Implementierung des Tanks 100 im Antriebsstrang 10 geeignet, solange gewährleistet ist, dass der verwendete Tank zur sicheren und verlässlichen Speicherung des LNG in der Lage ist. Dies schließt auch die Verwendung mehrerer Tanks nicht aus, seien sie autark voneinander oder zu einem größeren Tanksystem verbunden.

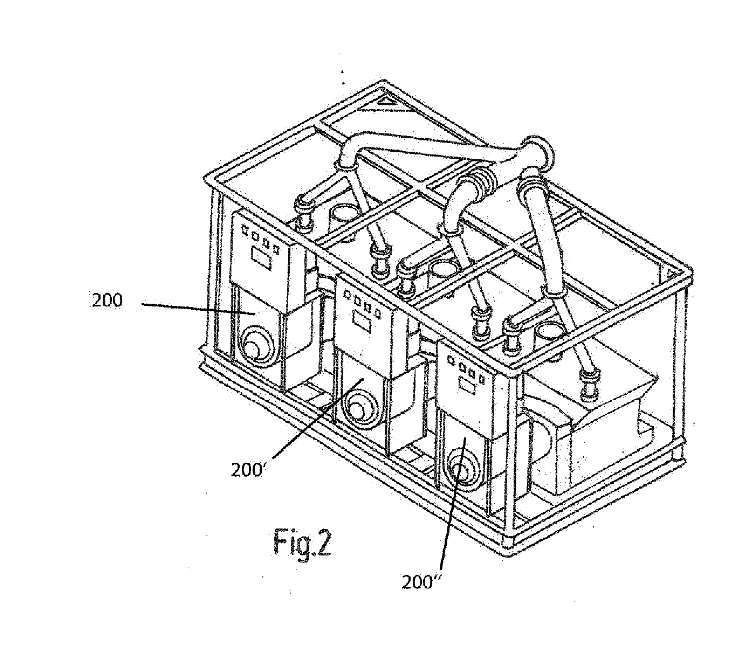

Die eine oder mehreren reinen LNG-Generatoren 200 (in Fig. 1 durch gestrichelte Kästchen dargestellt) dient oder dienen zur Erzeugung zumindest von elektrischer Energie aus der chemischen Energie des LNG aus dem Tank. Mit anderen Worten ist der reine LNG-Generator ausgebildet, vorzugsweise ausschließlich LNG zur Erzeugung der elektrischen Energie zu verwenden. Die LNG-Generatoren 200 können unter Verwendung der Aspekte, die unter Bezugnahme auf Fig. 2 beschrieben sind, noch umweltfreundlicher gestaltet werden.

Des Weiteren dient die Batterie 300 zur Speicherung der von dem LNG-Generator 200 erzeugten elektrischen Energie. Die Batterie 300 ist vorzugsweise als Pufferbatterie zur Kompensation von Lastenschwankungen der Antriebseinrichtung ausgebildet. Mit anderen Worten kann der erzeugte Strom (elektrische Energie) in die Pufferbatterie(n) 300 gespeist werden, wobei die Batterie(n) 300 wiederum den/die Antriebseinrichtung 400, umfassend einen Schiffspropeller, antreiben.

Außerdem kann die Batterie 300 in Ruhezeiten (z.B. über Nacht) mit normalem Netzstrom aufgeladen werden. Hierfür sind gegebenenfalls geeignete Anschlüsse zum Anschluss der mindestens einen Batterie an das Stromnetz vorzusehen. Während der Fahrt des Schiffs 1 laden die LNG-Generatoren 200 vorzugsweise die verbrauchte Energie bei der Batterie 300 stetig oder auch nur zeitweise nach. Mit anderen Worten dient die Zwischenschaltung der Batterie 300 zwischen dem elektromotorischen Antrieb 400 der Propellerwellen und den LNG-Generator 200 nicht nur der Zwischenspeicherung von Strom, sondern es wirken die Batterien 300 auch als Puffer für die LNG-Generatoren 200, da diese in der Regel bei gleichbleibender (optimaler) Last laufen müssen und nicht für Lastenwechsel ausgelegt sind. Dies trägt zur besonderen Umweltfreundlichkeit (Emissionsarmut) des erfindungsgemäßen Antriebsstrangs bei. Neben der reinen Verwendung von LNG als Brennstoff (vgl. Fig. 4) sorgt die Zwischenschaltung der (Puffer-) Batterie 300 für eine stets optimale Last an den LNG-Generatoren 200, was zur Folge hat, dass auch die Emissionsmaxima dieser LNG-Generatoren (die z.B. bei Unterdrehzahl oder Überdrehzahl, Anlassvorgängen, etc. entstehen) vermieden werden können.

Alternativ oder zusätzlich ist die Batterie 300 vorzugsweise als Hybridbatterie ausgebildet. Dies trägt ebenso zur größeren Umweltfreundlichkeit des erfindungsgemäßen Antriebsstrangs bei.

Schließlich dient die Antriebseinrichtung zum Bezug der elektrischen Energie von der Batterie 300, der Umwandlung der elektrischen Energie in mechanische Energie und dem Antrieb des Schiffs mittels der mechanischen Energie. Vorzugsweise umfasst die Antriebseinrichtung zumindest einen Düsenpropeller oder zumindest einen Schiffspropeller. Dies trägt ebenso zur größeren Umweltfreundlichkeit des erfindungsgemäßen Antriebsstrangs bei.

Schließlich sei noch angemerkt, dass die Komponenten 100, 200, 300 und 400 des Antriebsstrangs 10 örtlich konzentriert, z.B. am Ort der Antriebseinrichtung 400, angelegt sein können. Hierbei kann vorgesehen sein, dass der Antriebsstrang als feste Einheit ausgebildet ist, die beispielsweise als eine Einheit transportiert und/oder installiert werden kann. Ebenso ist es jedoch möglich, die Komponenten örtlich auf dem Schiff 1 verteilt anzulegen, wie in Fig. 1A gezeigt. Zum Beispiel können die Batterie 300 und die LNG-Generatoren 200 örtlich nahe angelegt sein, um die Leitungswege - und somit den elektrischen Verlust - zwischen den Komponenten 200 und 300 klein zu halten. Des Weiteren kann der Abstand zwischen dem Tank 100 und den anderen Komponenten 200, 300 und 400 hinreichend groß gewählt werden, um zum Beispiel im Falle einer Tankexplosion einen funktionsfähigen "Rest"-Antriebsstrang zu erhalten; zu diesem Zweck kann ein (nicht gezeigter) Nottank zwischen dem Tank 100 und den Komponenten 200 und 300 vorgesehen sein.

Fig. 2 zeigt einen zweiten Aspekt des erfindungsgemäßen Antriebsstrangs. Es kann oder können nämlich die LNG-Generatoren 200 durch Blockheizkraftwerke, BHWKs, ausgebildet sein. Die BHWKs 200, 200', 200" erzeugen neben elektrischer Energie auch thermische Energie bzw. können zur zusätzlichen Erzeugung von thermischer Energie ausgebildet sein. Die Nutzung dieser thermischen Energie, die sonst als Abwärme verloren ginge, gestaltet den erfindungsgemäßen Antriebsstrang 10 noch umweltfreundlicher.

In einer ersten Alternative ist das Schiff vorzugsweise für den Hafenbetrieb eingerichtet. Mit anderen Worten produziert eine Power-Barge (als Ausführungsform des Schiffs 1), solange sie anlegt, Strom und auch thermische Energie z.B. in Form von Fernwärme, die beide in landseitige Strom bzw. Fernwärmenetze (Energienetz) eingespeist werden können. Betrieben wird die Barge im "Landbetrieb" z.B. mittels Erdgas, das aus den landseitigen Erdgasnetzen zugeführt werden kann. Soll alternativ ein Schiff im Hafen, beispielsweise ein Kreuzfahrtschiff, versorgt werden, legt vorzugsweise die Barge 1 ab und produziert unter Verbrauch von LNG ausschließlich Strom für das Schiff. Die reinen Erdgas-Generatoren bzw. LNG-Generatoren sind daher zweckmäßig derart ausgelegt, dass sie sowohl LNG als auch aus landseitigen Erdgasnetzen stammendes Erdgas, im gasförmigen und/oder im flüssigen Zustand, verbrennen können.

Allgemeiner ausgedrückt ist das Schiff vorzugsweise durch zumindest eine Leitung mit einem landseitigen Energienetz verbunden bzw. verbindbar, ist der Tank des Antriebsstrangs vorzugsweise durch landseitig bereitgestelltes Erdgas auffüllbar, und ist vorzugsweise das Schiff 1 zur Zuführung der elektrischen und/oder thermischen Energie zu einem landseitigen Energienetz eingerichtet. Alternativ ist das Schiff vom Hafen bezüglich eines landseitigen Energienetzes vorzugsweise autark, und ist das Schiff vorzugsweise zur Zuführung der elektrischen und/oder thermischen Energie zu einem anderen Schiff eingerichtet.

Das heißt, bei Bedarf können die LNG- bzw. BHKW-Generatoren 200 während Hafenliegezeiten auch an das reguläre Netz angeschlossen werden und in dieses einspeisen.

Zusammenfassend ist in diesem Aspekt der erfindungsgemäße Antriebsstrang eine umweltfreundliche Implementierung eines mobilen Energielieferanten entweder für das Festland oder für andere Schiffe, wobei die Power Barge durch den Antriebsstrang selbst angetrieben wird. Gegebenenfalls kann auch nachts Strom produziert und ins landseitige Netz eingespeist werden.

Alternativ oder zusätzlich zum Hafenbetrieb kann das Schiff für den Seebetrieb eingerichtet sein. Bezüglich Fähren (als Ausführungsbeispiel des Schiffs 1) produziert der Antriebsstrang im Wesentlichen, bevorzugt ausschließlich, Strom für den Eigenverbrauch der Fähre, z.B. für den Fall, in dem die über Nacht mit normalem Nachtstrom aus dem Stromnetz aufgeladenen Batterien leer sind.

Im Seebetrieb kann die elektrische Energie zur Eigenversorgung des Schiffes verwendbar sein; hingegen kann die thermische Energie zur Erzeugung von Wärme oder Kälte verwendet werden. Im ersten Fall kann die erzeugte Wärme beispielsweise mittels eines, insbesondere auf dem Schiff vorgesehenen, Wärmespeichers, insbesondere Latentwärmespeichers, gespeichert werden. Auch kann die Wärme anderen geeigneten Verbrauchern auf dem Schiff zugeführt werden. In letzterem Fall kann die erzeugte Kälte einer Klimaanlage des Schiffes zugeführt werden. Mit anderen Worten ist es gegebenenfalls möglich, mittels (nicht gezeigter) zugeschalteter Adsorptionsmaschinen durch die Abwärme des Verbrennungsmotors Kälte zu erzeugen, mit der dann die Klimaanlagen des eigenen Schiffes oder auch dritter Schiffe, wie Kreuzfahrtschiffe, versorgt werden können.

Fig. 2 zeigt auch einen dritten Aspekt des erfindungsgemäßen Antriebsstrangs. Es können vorzugsweise mehrere LNG-Generatoren 200, 200', 200" in dem Antriebsstrang 10 vorhanden sein, die zu der Erzeugung elektrischer Energie, insbesondere mittels einer Steuereinrichtung, variabel zu- und abschaltbar sind. Vorzugsweise erfolgt Zu- und Abschalten der LNG-Generatoren 200, 200', 200" abhängig von der Last durch die Antriebseinrichtung 400.

Mit anderen Worten können Schiffe 1 eine Vielzahl von kleinen kompakten Einheiten der LNG-Generatoren 200 aufweisen. Diese LNG-Motoren dienen z.B. als BHKWs und produzieren bei gleichzeitiger Verbrennung von Gas, insbesondere Flüssiggas, Strom.

Durch dieses modulare Konzept kann die Umweltfreundlichkeit des erfindungsgemäßen Antriebsstrangs noch weiter gesteigert werden. Erfordern weder die Antriebseinrichtung noch die Batterie noch die Bordsysteme die volle Energieausgabe aller LNG-Generatoren 200, 200', 200", können diese entsprechend lastabhängig abgeschaltet werden. Daraus resultiert ein Optimum an Energieausgabe, die den LNG-Verbrauch senkt (was zur Umweltfreundlichkeit beiträgt) und darüber hinaus die Standzeit der LNG-Generatoren verlängert.

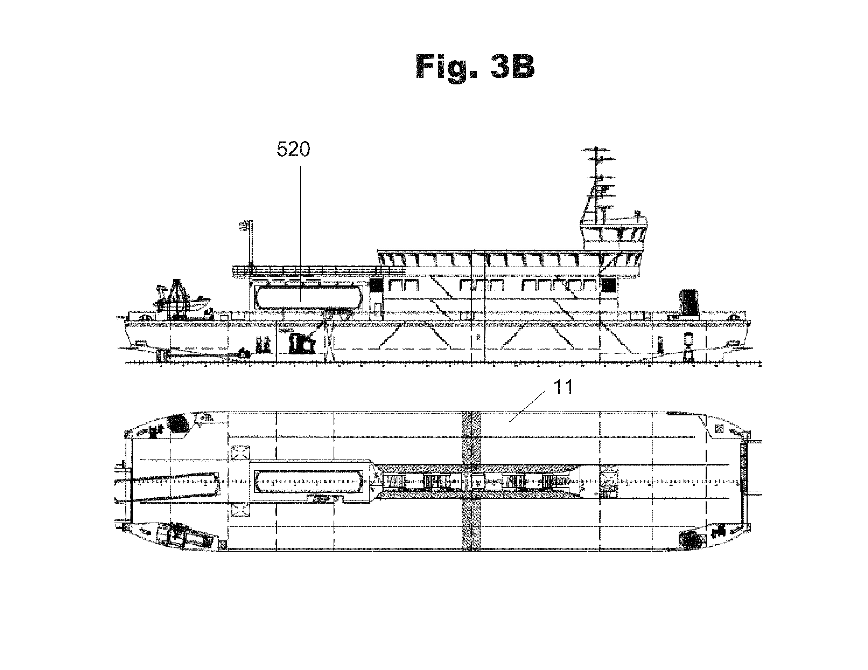

Figuren 3A und 3B zeigen einen vierten Aspekt des erfindungsgemäßen Antriebsstrangs: vorzugsweise ist der Tank 400 durch einen Tanklastzughänger 520 ausgebildet. Wie in Fig. 3A gezeigt, kann das Schiff auch vorzugsweise eingerichtet sein, zumindest einen Lastkraftwagen 500 bestehend aus einer Zugmaschine 510 und dem Tanklastzughänger 520 dauerhaft aufzunehmen. Beispielsweise kann der Tanklastzughänger von einem 40m³ Auflieger (bzw. Tank) für einen Lastkraftwagen gebildet werden.

In einer Alternative umfasst das Schiff 1 ferner einen (nicht gezeigten) Schleusenraum unter Deck, der zur Aufnahme des Lastkraftwagens eingerichtet ist. Wie in Fig. 3B gezeigt, ist in einer weiteren Alternative der Tanklastzughänger 520 oder der Lastkraftwagen 500 geschützt auf dem Hauptdeck 11 des Schiffes aufnehmbar.

Mit anderen Worten kann die Gasversorgung über einen Trailer bzw. Hänger 520 erfolgen. Bei der Hänger-Variante wird das Schiff 1 vorzugsweise derart gestaltet, dass ein Hänger 520 (bzw. der gesamte LKW 500) auf das Schiff 1 fahren kann und in dem dafür vorgesehenen Schleusenraum parkt. In diesem Schleusenraum wird vorzugsweise der Tank des Trailers 520 an die Gas-Generatoren, bevorzugt LNG-Generatoren 200, angeschlossen und versorgt diese mit Flüssiggas. Der Hänger 520 fährt vorzugsweise auf dem Schiff mit.

Dieser Aspekt ist dahin gehend umweltfreundlich, dass zum Beispiel keine weiteren Schadstoffemissionen durch den das LNG anliefernden Lastkraftwagen 500 (durch den Weg zurück vom Hafen) entstehen, wenn der gesamte Lastkraftwagen 500 auf dem Schiff 1 verbleibt; jedoch ist auch die Alternative mit lediglich dem Hänger 520, der auf dem Schiff verbleibt, vorteilhaft, da die abfahrende Zugmaschine 510 nun nicht durch das Gewicht des leeren Hängers 520 belastet ist.

Fig. 4 zeigt die bereits beschriebenen Vorteile des erfindungsgemäßen Antriebsstrangs 10. Im Einzelnen zeigt Figur 4 die Vorteile des erfindungsgemäßen Antriebsstrangs 10 (in den mit "natural gas" bezeichneten Säulen) im Vergleich mit herkömmlichen Dieselbrennstoff MDO (marines Dieselöl) mit 1% Schwefelbeimengung.

So beträgt die CO₂-Emission des erfindungsgemäßen Antriebsstrangs ca. 410 g/KWh, während der konventionelle Motor ca. 680 g/KWh erzeugt, was einer Einsparung von ca. 40% entspricht. Im Falle der Stickoxide (NOₓ) beträgt die Einsparung ca. 11 g/KWh im Verhältnis zu ca. 2 g/KWh, also ca. 80%. Wie außerdem in Fig. 4 gezeigt, zeigt der erfindungsgemäße Antriebsstrang weder Emissionen von Schwefeldioxid noch von Partikeln, wie z.B. Feinstaub.

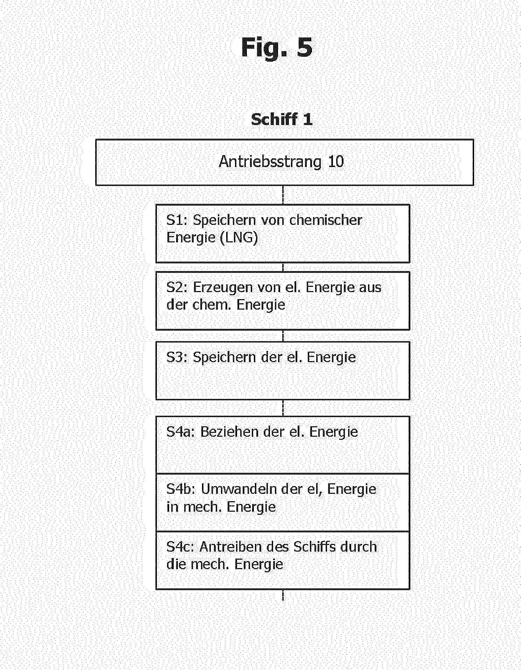

Fig. 5 schließlich zeigt einen Verfahrensaspekt des erfindungsgemäßen Antriebsstrangs. Das Verfahren dient zum Steuern des vorstehend beschriebenen Antriebsstrangs 10 und kann z.B. durch die (in Fig. 1 gezeigte) Steuereinrichtung 20 realisiert bzw. unterstützt werden. Das erfindungsgemäße Steuerverfahren umfasst die Schritte Speichern S1, in dem mindestens einen Tank 100, von chemischer Energie in Form von Gas, bevorzugt Flüssiggas und/oder Erdgas, besonders bevorzugt LNG oder LPG, Erzeugen S2, in dem mindestens einen Gas-Generator 200, zumindest von elektrischer Energie aus der chemischen Energie des Gases, Speichern S3, in der mindestens einen Batterie 300, der von dem mindestens einen Gas-Generator erzeugten elektrischen Energie, Beziehen S4a, durch die Antriebseinrichtung 400, der elektrischen Energie von der Batterie 300, Umwandeln S4b der elektrischen Energie in mechanische Energie, und Antreiben S4c, durch die Antriebseinrichtung 400, des Schiffes 1 mittels der mechanischen Energie.

### Bezugszeichenliste

- 1: Schiff
- 100: Tank
- 10: Antriebsstrang
- 11: Hauptdeck

- 200: LNG-Generator
- 200': LNG-Generator
- 200": LNG-Generator
- 20: Steuereinrichtung

- 300: Batterie

- 400: Antriebseinrichtung

- 500: Lastkraftwagen
- 510: Zugmaschine
- 520: Tanklastzughänger

- S1: Speichern
- S2: Erzeugen
- S3: Speichern
- S4a: Beziehen
- S4b: Umwandeln
- S4c: Antreiben

## Patentansprüche

1. Antriebsstrang (10) zur Verwendung in einem Schiff (1), wobei der Antriebstrang besteht aus:
mindestens einem Tank (100), der zur Speicherung von chemischer Energie in Form von Gas, bevorzugt Flüssiggas und/oder Erdgas, besonders bevorzugt LNG oder LPG, eingerichtet ist;
mindestens einem reinen Gas-Generator, bevorzugt Flüssiggas-Generator und/oder Erdgas-Generator, besonders bevorzugt LNG-Generator (200) oder LPG-Generator, der zur Erzeugung zumindest von elektrischer Energie aus der chemischen Energie des Gases aus dem mindestens einem Tank (100) eingerichtet ist;
mindestens einer Batterie (300), die zur Speicherung der von dem Gas-Generator erzeugten elektrischen Energie eingerichtet ist; und
einer Antriebseinrichtung (400), die eingerichtet ist, die elektrische Energie von der mindestens einen Batterie zu beziehen, um die elektrische Energie in mechanische Energie umzuwandeln und um das Schiff mittels der mechanischen Energie anzutreiben.

2. Antriebsstrang gemäß Anspruch 1, wobei der mindestens eine reine Gas-Generator eingerichtet ist, ausschließlich Gas zur Erzeugung der elektrischen Energie zu verwenden, wobei bevorzugt der mindestens eine reine Gas-Generator als LNG-Generator (200) ausgebildet ist und eingerichtet ist, ausschließlich LNG zur Erzeugung von elektrischer Energie zu verwenden.

3. Antriebsstrang gemäß Anspruch 1 oder 2, wobei die mindestens eine Batterie (300) als Pufferbatterie zur Kompensation von Lastenschwankungen der Antriebseinrichtung (400) ausgebildet ist, und/oder wobei die mindestens eine Batterie (300) als Hybridbatterie ausgebildet ist.

4. Antriebsstrang gemäß zumindest einem der vorgehenden Ansprüche, wobei die Antriebseinrichtung (400) zumindest einen Schiffspropeller oder zumindest einen Düsenpropeller umfasst.

5. Antriebsstrang gemäß zumindest einem der vorgehenden Ansprüche, wobei der mindestens eine reine Gas-Generator durch ein oder mehrere Blockheizkraftwerke, BHWKs, ausgebildet ist, wobei der mindestens eine reine Gas-Generator bevorzugt als LNG-Generator (200) ausgebildet ist, wobei bevorzugt die BHWKs neben elektrischer Energie auch thermische Energie erzeugen.

6. Schiff, umfassend einen Antriebsstrang gemäß einem der vorhergehenden Ansprüche, wobei das Schiff (1) für den Hafenbetrieb eingerichtet ist.

7. Schiff gemäß Anspruch 6, wobei:
das Schiff (1) durch zumindest eine Leitung mit einem landseitigen Energienetz verbunden ist,
der mindestens eine Tank (100) des Antriebsstrangs (10) durch landseitig bereitgestelltes Gas, insbesondere Erdgas, auffüllbar ist, und
das Schiff (1) zur Zuführung elektrischer und/oder thermischer Energie zu einem landseitigen Energienetz eingerichtet ist.

8. Schiff gemäß Anspruch 6 oder 7, wobei:
das Schiff (1) zur Zuführung elektrischer und/oder thermischer Energie zu einem anderen Schiff eingerichtet ist, wobei bevorzugt das Schiff (1) bezüglich eines landseitigen Energienetzes autark ist.

9. Schiff, umfassend einen Antriebsstrang gemäß einem der Ansprüche 1 bis 5, wobei das Schiff (1) für den Seebetrieb eingerichtet ist.

10. Schiff gemäß Anspruch 9, wobei die elektrische Energie zur Eigenversorgung des Schiffes (1), insbesondere ausschließlich zur Eigenversorgung des Schiffes (1), verwendbar ist.

11. Schiff gemäß einem der Ansprüche 6 bis 10, umfassend einen Antriebsstrang gemäß Anspruch 5, wobei die thermische Energie zur Erzeugung von Wärme und/oder Kälte verwendet wird, wobei bevorzugt ein Wärmespeicher, insbesondere Latentwärmespeicher, zur Speicherung der erzeugten Wärme vorgesehen ist und/oder wobei bevorzugt die erzeugte Kälte der Klimaanlage des Schiffes zuführbar ist.

12. Antriebsstrang gemäß zumindest einem der Ansprüche 1 bis 5, wobei:
mehrere Gas-Generatoren, insbesondere mehrere LNG-Generatoren (200, 200', 200"), in dem Antriebsstrang vorhanden sind, die zu der Erzeugung elektrischer Energie variabel zu- und abschaltbar sind, wobei bevorzugt das Zu- und Abschalten der Gas-Generatoren abhängig von der Last der Antriebseinrichtung (400) und/oder von dem Ladezustand der mindestens einen Batterie (300) erfolgt.

13. Schiff, umfassend einen Antriebsstrang gemäß zumindest einem der Ansprüche 1 bis 5, oder 12, wobei der mindestens eine Tank (100) durch einen Tanklastzughänger (520) ausgebildet wird, wobei bevorzugt das Schiff eingerichtet ist, zumindest einen Lastkraftwagen (500) umfassend eine Zugmaschine (510) und den Tanklastzughänger (520) dauerhaft aufzunehmen, wobei besonders bevorzugt einen Schleusenraum unter Deck des Schiffs (1) vorgesehen ist, der zur Aufnahme des Lastkraftwagens (500) eingerichtet ist.

14. Schiff gemäß Anspruch 13, wobei der Tanklastzughänger (520) oder der Lastkraftwagen (500) geschützt auf dem Hauptdeck (11) des Schiffes (1) aufnehmbar ist.

15. Batterie (300) zur Verwendung in einem Antriebsstrang gemäß zumindest einem der Ansprüche 1 bis 5 oder 12.

16. Gas-Generator, insbesondere LNG-Generator (200), zur Verwendung in einem Antriebsstrang gemäß zumindest einem der Ansprüche 1 bis 5 oder 12.

17. Verfahren zum Steuern eines Antriebsstrangs (10) zur Verwendung in einem Schiff, wobei der Antriebstrang aus mindestens einem Tank (100), mindestens einem reinen Gas-Generator, bevorzugt Flüssiggas-Generator und/oder Erdgas-Generator, besonders bevorzugt LNG-Generator (200) oder LPG-Generator, mindestens einer Batterie (300) und einer Antriebseinrichtung (400) besteht, umfassend die Schritte:
Speichern (S1), in dem mindestens einen Tank (100), von chemischer Energie in Form von Gas, bevorzugt Flüssiggas und/oder Erdgas, besonders bevorzugt LNG oder LPG;
Erzeugen (S2), in dem mindestens einen reinen Gas-Generator, zumindest von elektrischer Energie aus der chemischen Energie des Gases;
Speichern (S3), in der mindestens einen Batterie (300), der von dem mindestens einen Gas-Generator erzeugten elektrischen Energie;
Beziehen (S4a), durch die Antriebseinrichtung (400), der elektrischen Energie von der mindestens einen Batterie (300) und/oder von dem mindestens einen reinen Gas-Generator;
Umwandeln (S4b) der elektrischen Energie in mechanische Energie; und
Antreiben (S4c), durch die Antriebseinrichtung (400) des Schiffes (1) mittels der mechanischen Energie.
